# EUROPÄISCHE PATENTANMELDUNG

(11) **EP 3 712 011 A1**
(43) Veröffentlichungstag der Anmeldung: **23.09.2020**
(21) Anmeldenummer: 20163923.4
(22) Anmeldetag: 18.03.2020
(51) Int. Cl.: B60P 7/08, B60R 5/04, B60R 11/00

(54) **KOFFERRAUMBOX MIT SPEZIELLER FIXIERUNG DURCH KEILE MIT BESONDERER AUSFÜHRUNG**

(30) Priorität: 22.03.2019 AT 1072019
(71) Anmelder: Stangl, Horst Peter, 4225 Luftenberg (AT); Horst Peter Stangl Ausrom Eutectics, 4225 Luftenberg (AT)
(72) Erfinder: Stangl, Horst Peter, 4225 Luftenberg (AT)
(74) Vertreter: Hübscher & Partner Patentanwälte GmbH

(57) **Zusammenfassung**

Es wird eine Vorrichtung zur Fixierung eines Behältnisses (1) im Kofferraum eines Fahrzeuges mit Verzurrösen (2), Keilen (3) und einem Behälterboden (4) vorgeschagen. Um einfache Montageverhältnisse zu schaffen, wird vorgeschlagen, dass der Behälterboden (4) mit Löchern (5) ausgeführt ist, wobei ein Loch (5) auf eine aufgestellte Verzurröse (2) derart aufstellbar ist, dass diese durch das Loch (5) des Behälterbodens ins Innere des draufgesetzten Behältnisses (1) ragt, wobei zur Fixierung des Behältnisses (1) zwischen die aufgestellte Verzurröse (2) und den Behälterboden (4) ein Keil (3) steckbar ist.

## Beschreibung

Die Erfindung bezieht sich auf eine Vorrichtung zur Fixierung eines Behältnisses im Kofferraum eines Fahrzeuges mit Verzurrösen, Keilen und einem Behälterboden.

Am internationalen Markt gibt es vielfältigste Kofferraumbehältnisse und verschiedenste Montageverhältnisse. Die US 2008245311 A1, die WO 2016092496 A1, die GB 2446816 A und die DE 102005033201 A1 beschreiben derartige Vorrichtungen zum Befestigen einer Kofferraumbox.

Der Erfindung liegt somit die Aufgabe zugrunde, eine Vorrichtung zur Fixierung eines Behältnisses im Kofferraum eines Fahrzeuges zu schaffen, die zerstörungsfrei und sehr einfach montiert werden kann.

Die Erfindung löst die gestellte Aufgabe dadurch, dass der Behälterboden mit Löchern ausgeführt ist, wobei ein Loch auf eine aufgestellte Verzurröse derart aufstellbar ist, dass diese durch das Loch des Behälterbodens ins Innere des draufgesetzten Behältnisses ragt, wobei zur Fixierung des Behältnisses zwischen die aufgestellte Verzurröse und den Boden des Behältnisses ein Keil steckbar ist.

Die Erfindung unterscheidet sich von allen anderen bekannten Vorrichtungen dadurch, dass die insbesondere der Länge nach im Kofferraum positionierte Kofferraumbox mit der erfindungsgemäßen Fixierung durch Keile zerstörungsfrei und sehr einfach montiert werden kann und nebenbei für Fahrzeuge, welche bereits ohne Reserverad oder sogar ohne Notrad ausgeliefert werden, die Möglichkeit zum Mitführen eines Rades in der Kofferaumbox bietet. Weiters wird durch den Einbau der Box, der Länge des Kofferraumes nach, die Tiefe desselben erhalten. Die Kofferraumbox ist verschließbar und kann diverse Gegenstände gesichert in sich aufnehmen.

Der Keil weist eine Form eines gebogenen Schiffchens auf, wobei das Schiffchen einen mittigen Schwerpunkt aufweist. Durch diesen speziell geformten Keil in Form eines gebogenen Schiffchens ist der Keil selbststabilisierend. Dazu wird der Keil zwischen den mit Löchern ausgeführten Boden der Kofferraumbox und die aufgestellte, in das Loch des Behälterbodens ragende Verzurröse gesteckt. Der Keil ruht in seiner Montagelage zentral unter der Verzurröse, die in etwa quer über der zentralen Querachse der des Keiles zu liegen kommt. Ausgehend von dieser Querachse sind die beiden Enden des Keiles in Richtung der einschubrichtungsparallelen Hauptachse der des Keiles aufgebogen, womit einerseits eine gewisse Federvorspannung zur Klemmung des Keiles in seiner Montagelage sichergestellt ist, aber auch die gewünschte Selbststabilisierung unterstützt wird. Eine verbesserte Selbststabilisierung ergibt sich auch, wenn der Keil eine Form eines gebogenen Schiffchens aufweist, da der Schwerpunkt des Schiffchens dadurch tiefer liegt, was der Selbststabilisierung zugutekommt.

Die Erfindung ist darauf gerichtet, dass ein speziell geformter, sich selbst stabilisierender Keil, welcher zwischen die aufgestellte Verzurröse, die ins Innere des draufgesetzten Behältnisses ragt, und den Boden des Behältnisses (der Kofferraumbox) gesteckt wird und so das Behältnis fixiert. Der Behälterboden weit dazu insbesondere mehrere Löcher auf, um den Behälter bei unterschiedlichen fahrzeugtypen mit unterschiedlichsten Verzurrösenanordnungen verwenden zu können.

Zwecks Feineinstellung der Keillage könnten die Löcher im Behälterboden als Langlöcher ausgebildet sein, die ein entlang des Langloches, insbesondere entlang des Langlochrandes, verschiebbares Adapter aufnehmen, durch das die aufgestellte Verzurröse ins Innere des draufgesetzten Behältnisses ragt, wobei zur Fixierung des Behältnisses zwischen die aufgestellte Verzurröse und in den Behälterboden eingesetztem Adapter ein Keil steckbar ist.

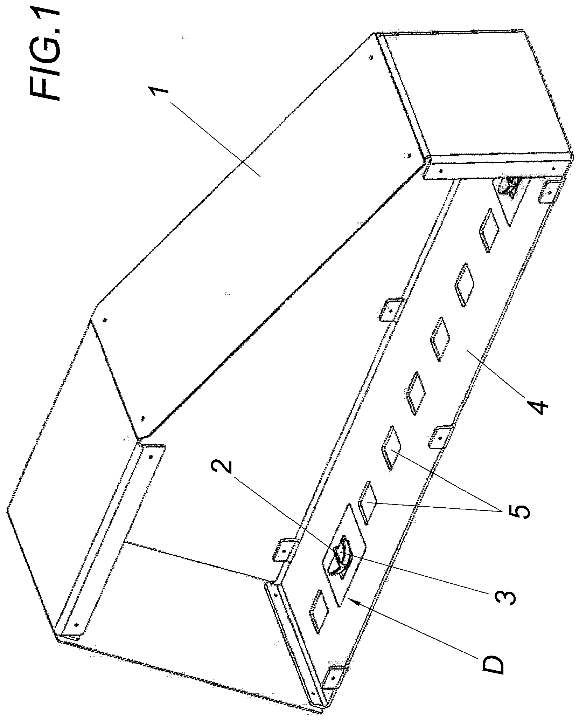

In der Zeichnung ist der Erfindungsgegenstand beispielsweise dargestellt. Es zeigen
- Fig. 1: eine Vorrichtung zur Fixierung eines Behältnisses in Schrägansicht,

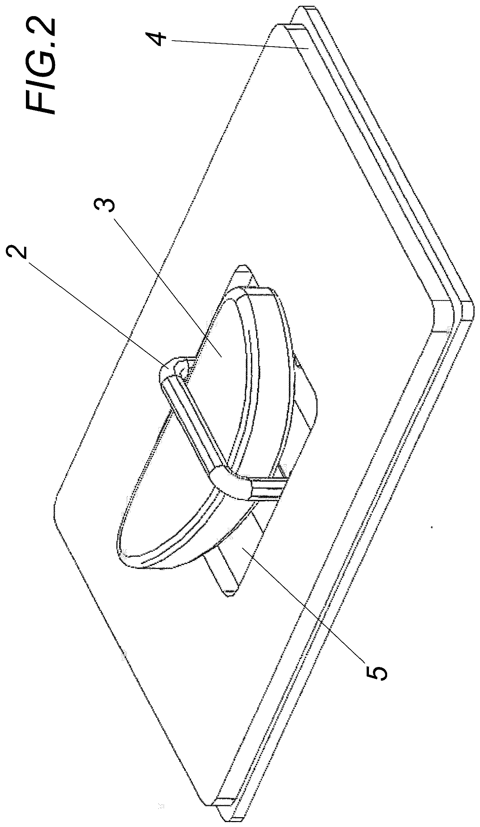

- Fig. 2: das vergrößerte Detail D der Vorrichtung zur Fixierung aus Fig. 1 in Schrägansicht,

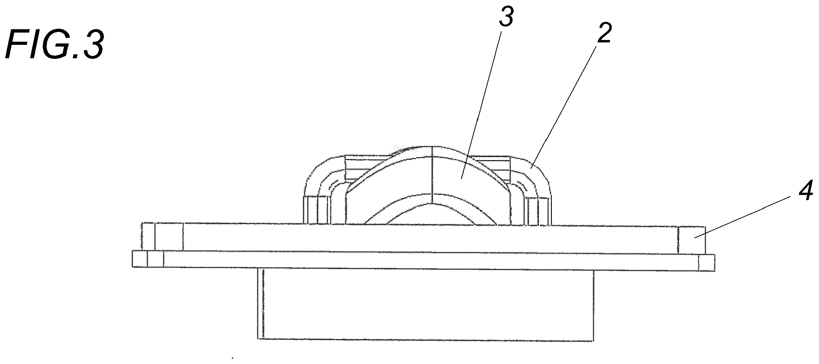

- Fig. 3: das Detail D aus Fig. 2 in Vorderansicht,

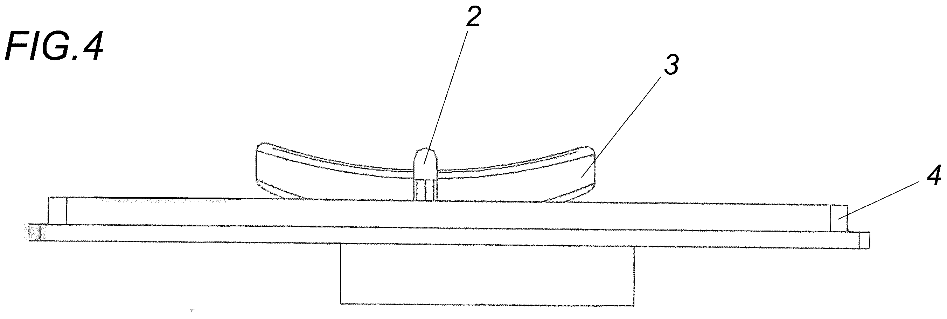

- Fig. 4: das Detail D aus Fig. 2 in Seitenansicht und

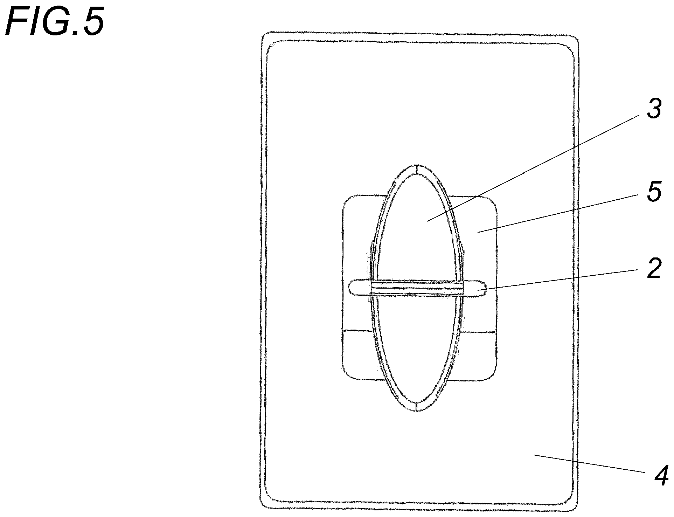

- Fig. 5: das Detail D aus Fig. 2 in Draufsicht

Die Vorrichtung zur Fixierung eines Behältnisses 1 im Kofferraum eines Fahrzeuges umfasst Verzurrösen 2, Keile 3 und einen Behälterboden 4. Der Behälterboden 4 ist mit Löchern 5 ausgeführt, wobei ein Loch 5 auf eine aufgestellte Verzurröse 2 derart aufstellbar ist, dass diese durch das Loch 5 des Behälterbodens 4 ins Innere des draufgesetzten Behältnisses 1 ragt. Zur Fixierung des Behältnisses 1 ist zwischen die aufgestellte Verzurröse 2 und den Behälterboden 4 ein Keil 3 steckbar.

Ein Keil 3 besitzt eine Form eines gebogenen Schiffchens, wobei das Schiffchen einen mittigen Schwerpunkt aufweist.

## Patentansprüche

1. Vorrichtung zur Fixierung eines Behältnisses (1) im Kofferraum eines Fahrzeuges mit Verzurrösen (2), Keilen (3) und einem Behälterboden (4), **dadurch gekennzeichnet, dass** der Behälterboden (4) mit Löchern (5) ausgeführt ist, wobei ein Loch (5) auf eine aufgestellte Verzurröse (2) derart aufstellbar ist, dass diese durch das Loch (5) des Behälterbodens ins Innere des draufgesetzten Behältnisses (1) ragt, wobei zur Fixierung des Behältnisses (1) zwischen die aufgestellte Verzurröse (2) und den Behälterboden (4) ein Keil (3) steckbar ist.

2. Vorrichtung nach Anspruch 1, **dadurch gekennzeichnet, dass** der Keil (3) eine Form eines gebogenen Schiffchens aufweist.

3. Vorrichtung nach Anspruch 2, **dadurch gekennzeichnet, dass** das Schiffchen einen mittigen Schwerpunkt aufweist.
